# EUROPEAN PATENT SPECIFICATION

(11) **EP 0 842 719 B1**
(45) Date of publication and mention of the grant of the patent: **10.04.2002**
(21) Application number: 97203487.0
(22) Date of filing: 08.11.1997
(51) Int. Cl.: B21D 43/05

(54) **Transfer device for machine tools**
Transfereinrichtung für Werkzeugmaschinen
Dispositif de transfert pour machine-outil

(30) Priority: 15.11.1996 IT MI962379
(43) Date of publication of application: 20.05.1998
(73) Proprietor: Manzoni Presse S.p.A., 22053 Lecco (IT)
(72) Inventor: Farina, Luciano, 22053 Lecco (IT); Vergani, Marco, 20038 Seregno, Milano (IT)
(74) Representative: Faraggiana, Vittorio, Dr. Ing.

(56) References cited:
- DE-A- 19 506 079
- PATENT ABSTRACTS OF JAPAN vol. 015, no. 190 (M-1113), 16 May 1991 & JP 03 047639 A (KOMATSU LTD), 28 February 1991,

## Description

This invention refers to transfer presses, and more in particular to the transfer mechanism associated with them. Transfers for presses are generally composed of a pair of parallel bars, onto which the elements for gripping the pieces to be transported are designed to be fitted. These elements can have the most diverse configurations, in relation to the processing to be carried out and the configurations of the pieces.

In these transfers, the pair of bars is guided in a longitudinal forward movement and must also be movable in a vertical direction. Moreover, the two bars must be provided with reciprocal movements to bring them close to and away from each other.

Hence, each bar is movable along three orthogonal axes. More in particular, according to the commonly used conventional transfer structure, the bars are carried on supports which are made to move vertically, by means of a motorized control, on saddles capable of sliding horizontally, crosswise to the bars. The two saddles are made to move away from or close to each other by suitable motors, to define the distance between the bars. The bars are also movable longitudinally on the supports.

According to the known technique, the mechanism for the longitudinal movement of the bars comprises a stationary drive unit of various type, which draws the bars in their longitudinal movement through a kinematic coupling which engages the bars longitudinally only, allowing them to maintain their vertical and transversal freedom of movement.

This unit acts on the ends of the bars and causes a considerable obstruction in correspondence with the head of the transfer. Moreover, it is complicated and expensive to control the bars by means of a connection which leaves the bars two degrees of freedom of movement along the axes perpendicular to the longitudinal axis.

A further transfer device known in the prior art is disclosed by DE-A-19 506 079. A plurality of grippers is moved along the supporting bars by means of linear motors. However, since each of the grippers must be provided with an independent motor, even this device is complex and expensive.

To obviate these problems, according to the invention a transfer for machine tools, in particular presses, comprises a pair of parallel bars, for supporting the elements to be transferred, carried longitudinally sliding on supports, the supports being movable in a crosswise direction to the bars in order to vary the distance between them and in a direction perpendicular to the plane containing the pairs of bars, and is characterized by the fact that the bars are made to move longitudinally by linear motors interposed between each bar and the corresponding support.

The technical solution identified by the invention will be more clearly evident from the following description of an exemplificative embodiment, schematically illustrated in the accompanying drawings, in which:

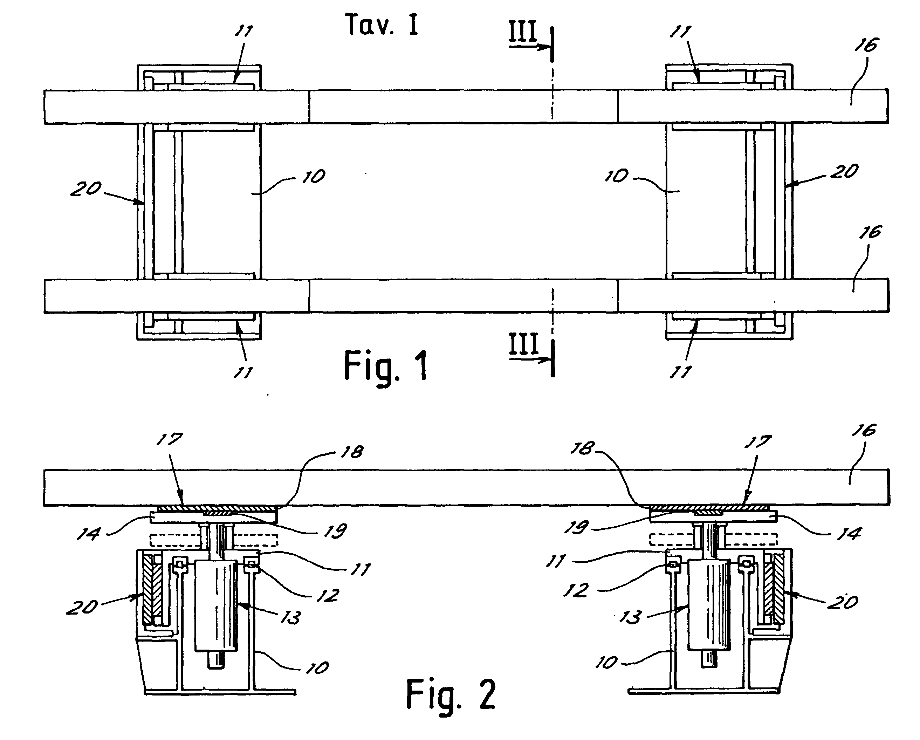

- figures 1 and 2 respectively show a plan view and a front elevational view of a transfer according to the invention.

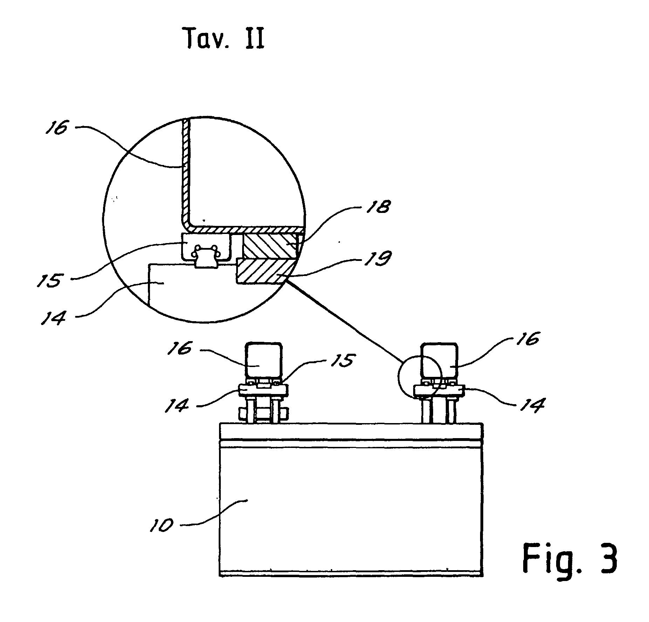

Figure 3 shows an enlarged view of a section along the line III-III represented in figure 1.

The transfer is composed of two bedplates 10, equally spaced apart.

Mounted on each bedplate are two saddles 11, movable on linear bearings 12. Mounted on each saddle is an actuating element 13 which vertically moves a support 14, which is consequently provided with a horizontal and vertical movement. Carried on each support, by means of linear roller bearings 15 is a bar 16. Secured respectively to the bar 16 and to the support 14 are the two reciprocally movable parts 18, 19 of a linear electric motor generically indicated by reference 17. A linear motor 20, wholly similar to the motor 17, is interposed between each movable saddle 11 and the bedplate 10, to control the linear movement of the saddle in a crosswise direction to the bars 16.

For the movement of each support 14 in a vertical direction and in a horizontal direction perpendicular to the bars, actuators 13 and 20 respectively have been exemplified. However, these servomotor members for carrying out these movements, with their respective kinematic control mechanisms, can in any case be made according to the techniques traditionally used in these transfers, for the same purpose. An essential characteristic of the transfer according to the invention is to use the linear motor 17 interposed between supports 14 and bars 16 to effect the longitudinal stroke of the bar, thereby avoiding the conventional use of a pulling device acting on one of the ends of the bars by means of a connection which leaves the bars free to move vertically and towards each other.

According to the invention, the linear servomotor 17 for control of the longitudinal translation of the bars operates directly between the bar and the support that slidingly carries it, the movements according to the other two axes being carried out by the supports.

The actuator 13 can also be composed of a linear motor, like the servomotors 17 and 20, even though other known controls can be equivalently used, if necessary mechanically connected to the device that raises the other support fitted in correspondence with the same bedplate, for the coordinated movement of the two bars.

The linear motors can be chosen from among any suitable type capable of making the controlled elements go through those step-by-step movements typical of the type of transfer that the invention refers to. In the described embodiment, the linear motor is received between the guides for the longitudinal sliding of the bars. However, the motor may be disposed in any other suitable position between the support and the bar. For example, the supports 14 may have bases secured to them which are shaped in such a way as to receive one of the elements of the motor, the other element of the motor being secured directly to the bar or to a suitable base secured to the bar itself.

## Claims

1. Transfer for machine tools, in particular presses, comprising a pair of parallel bars (16), for supporting the elements to be transferred, carried longitudinally sliding on supports (14), the supports (14) being movable in a crosswise direction to the bars (16) to vary the distance between them and in a direction perpendicular to the plane containing the pairs of bars, **characterized by** the fact that the bars (16) are made to move longitudinally by linear motors (17) interposed between each bar (16) and the corresponding support (14).

2. Transfer as claimed in claim 1, **characterized in that** the two reciprocally movable parts (18, 19) of the linear motor (17) are secured directly to the bar (16) and to the support (14) respectively.

3. Transfer as claimed in claim 2, **characterized in that** the linear motor (17) is received between linear guides (15) for interconnection between bar (16) and support (14).

4. Transfer as claimed in claim 1, **characterized in that** the support (14) is guided to move in a direction perpendicular to the plane containing the bars (16) on a saddle (11) guided to move in a crosswise direction to the bars (16) on a bedplate (10).

5. Transfer as claimed in claim 4, **characterized in that** the movement of the support (14) with respect to the bedplate (10) is controlled by a linear motor (20).

## Patentansprüche

1. Transfereinrichtung für Werkzeugmaschinen, insbesondere Pressen, die ein Paar paralleler Stangen (16) zum Halten der zu transferierenden Elemente umfasst, die in Längsrichtung gleitend auf Trägern (14) getragen werden, wobei die Träger (14) in Querrichtung zu den Stangen (16) bewegbar sind, um den Abstand zwischen ihnen und in einer Richtung senkrecht zu der Ebene, die die Paare von Stangen enthält, zu variieren, **dadurch gekennzeichnet, dass** die Stangen (16) durch Linearmotoren, die zwischen jede Stange (16) und den entsprechenden Träger (14) gesetzt sind, veranlasst werden, sich in Längsrichtung zu bewegen.

2. Transfereinrichtung nach Anspruch 1, **dadurch gekennzeichnet, dass** die zwei umgekehrt beweglichen Teile (18, 19) des Linearmotors (17) direkt an der Stange (16) bzw. dem Träger (14) angebracht sind.

3. Transfereinrichtung nach Anspruch 2, **dadurch gekennzeichnet, dass** der Linearmotor (17) zwischen linearen Führungen (15) zur Verbindung zwischen Stange (16) und Träger (14) aufgenommen ist.

4. Transfereinrichtung nach Anspruch 1, **dadurch gekennzeichnet, dass** der Träger (14) so geführt ist, dass er sich in einer Richtung senkrecht zu der Ebene, die die Stangen (16) enthält, auf einem Schlitten (11) bewegt, der so geführt ist, dass er sich in Querrichtung zu den Stangen (16) auf einer Grundplatte (10) bewegt.

5. Transfereinrichtung nach Anspruch 4, **dadurch gekennzeichnet, dass** die Bewegung des Trägers (14) in Bezug auf die Grundplatte (10) von einem Linearmotor (20) gesteuert wird.

## Revendications

1. Dispositif de transfert pour machine-outil, en particulier des presses, comprenant une paire de barres parallèles (16), pour supporter les éléments à transférer, supportées de manière coulissante dans le sens longitudinal sur des supports (14), les supports (14) pouvant se déplacer dans une direction transversale aux barres (16) pour faire varier la distance entre celles-ci et dans une direction perpendiculaire au plan contenant les paires de barres, **caractérisé par le fait que** les barres (16) sont amenées à se déplacer longitudinalement sous l'effet des moteurs linéaires (17) interposés entre chaque barre (16) et le support correspondant (14).

2. Dispositif de transfert selon la revendication 1, **caractérisé en ce que** les deux parties déplaçables en va-et-vient (18, 19) du moteur linéaire (17) sont fixées directement à la barre (16) et au support (14), respectivement.

3. Dispositif de transfert selon la revendication 2, **caractérisé en ce que** le moteur linéaire (17) est reçu entre les guides linéaires (15) pour une interconnexion entre la barre (16) et le support (14).

4. Dispositif de transfert selon la revendication 1, **caractérisé en ce que** le support (14) est guidé pour se déplacer dans une direction perpendiculaire au plan contenant les barres (16) sur un chariot (11) guidé pour se déplacer dans une direction transversale aux barres (16) sur une plaque d'appui (10).

5. Dispositif de transfert selon la revendication 4, **caractérisé en ce que** le déplacement du support (14) par rapport à la plaque d'appui (10) est commandé par un moteur linéaire (20).
